# EUROPÄISCHE PATENTSCHRIFT

(11) **EP 0 852 366 B1**
(45) Veröffentlichungstag und Bekanntmachung des Hinweises auf die Patenterteilung: **20.03.2002**
(21) Anmeldenummer: 97118747.1
(22) Anmeldetag: 28.10.1997
(51) Int. Cl.: G07F 17/16, G07F 19/00, H04M 17/00, G07F 7/10

(54) **Verfahren zur Erhebung von Abrechnungsdaten für die Nutzung von programmierten oder programmtechnisch verfügbaren Diensten**
Method for charging the use of programmed or program-technically available services
Méthode pour régler le paiement de services programmés ou disponibles par des moyens techniques programmés

(30) Priorität: 29.11.1996 DE 19649693
(43) Veröffentlichungstag der Anmeldung: 08.07.1998
(73) Patentinhaber: SIEMENS AKTIENGESELLSCHAFT, 80333 München (DE)
(72) Erfinder: Mrva, Michael, Dr., 85640 Putzbrunn (DE); Buchenrieder, Klaus, Prof., 85521 Riemerling (DE)

(56) Entgegenhaltungen:
- WO-A-94/24826
- US-A- 5 347 632
- US-A- 5 428 606
- US-A- 5 511 113
- US-A- 5 553 239
- HEINDEL L E ET AL: "QUEUED TRANSACTION PROCESSING WITHIN THE UNIX OPERATING SYSTEM ENVIRONMENT" PROCEEDINGS OF THE INTERNATIONAL PHOENIX CONFERENCE ON COMPUTERS AN COMMUNICATIONS, TEMPE, MAR. 23 - 26, 1993, Nr. CONF. 12, 23. März 1993, Seiten 441-446, XP000370513 INSTITUTE OF ELECTRICAL AND ELECTRONICS ENGINEERS

## Beschreibung

Bei der Benutzung programmierter oder programmtechnisch verfügbarer Dienste, beispielsweise Internet über einen Netbrowser, erfolgt die Abrechnung über die Vorrichtung, von der aus der Dienst abgerufen wird.

Aus der WO 94 248 26 A ist ein vernetztes Rechnersystem bekannt, in welchem kostenpflichtige Dienste abrufbar sind. Zur Kostenermittlung eines solchen Dienstes werden zentral Abrechnungsdaten ermittelt und an einen Kostenermittlungsrechner übertragen.

Das der Erfindung zugrunde liegende Problem besteht darin, während der Nutzung von programmierten oder programmtechnisch verfügbaren Diensten Abrechnungsdaten differenziert z.B. nach Verwendungszweck (privat oder dienstlich) zu erheben.

Das Problem wird durch das Verfahren gemäß den Merkmalen des Patentanspruchs 1 gelöst.

Die Erhebung der Abrechnungsdaten für die Nutzung von programmierten oder programmtechnisch verfügbaren Diensten kann interaktiv durchgeführt werden. Der Benutzer kann beispielsweise durch Drücken eines Feldes im Netbrowser den Abrechnungsmodus ändern, beispielsweise von dienstlicher auf private Nutzung. Dabei kann von einem Multitasking-Betriebssystem ausgegangen werden, bei dem schon beim Starten der benutzerspezifischen Umgebung ein Abrechnungsprogramm unsichtbar im Hintergrund als eigene Task gestartet wird. Der Start des Programms zur Nutzung programmierter oder programmtechnisch verfügbarer Dienste startet einen für dieses Programm spezifischen Abrechnungsmanager. Der Abrechnungsmanager kommuniziert mit dem Abrechnungsprogramm und teilt z.B. benutzerspezifische Abrechnungsdaten mit.

Weiterhin soll das Verfahren den kontrollierten Zugang zu unterschiedlichen Diensten unterstützen, und es soll neben der kosten- und zeitsparenden Darstellung eine detaillierte Abrechnung unterschiedlicher Leistungen möglich sein. Außerdem sollen die erfaßten Daten elektronisch weiterverarbeitet werden können und Datenschutzbestimmungen eingehalten werden.

Eine vorteilhafte Weiterbildung des erfindungsgemäßen Verfahrens ist die parallele Abrechenbarkeit von mehreren Programmen zur Nutzung programmierter oder programmtechnisch verfügbarer Dienste. Jedes dieser Programme verfügt über einen eigenen Abrechnungsmanager, und jeder dieser Abrechnungsmanager kommuniziert mit dem Abrechnungsprogramm.

Eine weitere vorteilhafte Ausprägung besteht in den vielfältigen Möglichkeiten zur Umschaltung der Erfassung von Abrechnungsdaten. So kann die Umschaltung beispielsweise durch das oben erwähnte Feld im Netbrowser erfolgen oder an den Aufruf verschiedener Dienste automatisch gekoppelt sein.

Weiterbildungen des erfindungsgemäßen Verfahrens ergeben sich aus den abhängigen Ansprüchen.

Anhand von Ausführungsbeispielen, die in den Figuren dargestellt sind, wird die Erfindung weiter erläutert.

Es zeigen
- Fig.1: ein Ablaufdiagramm, in dem die einzelnen Verfahrensschritte dargestellt sind,
- Fig.2: eine Skizze, in der die Grundstruktur einer programmtechnischen Lösung gezeigt ist,
- Fig.3: eine Skizze, in der ein Ausführungsbeispiel für die Kommunikation mehrerer Anwendungen zur Nutzung programmierter oder programmtechnisch verfügbarer Dienste mit dem Abrechnungsprogramm dargestellt ist.

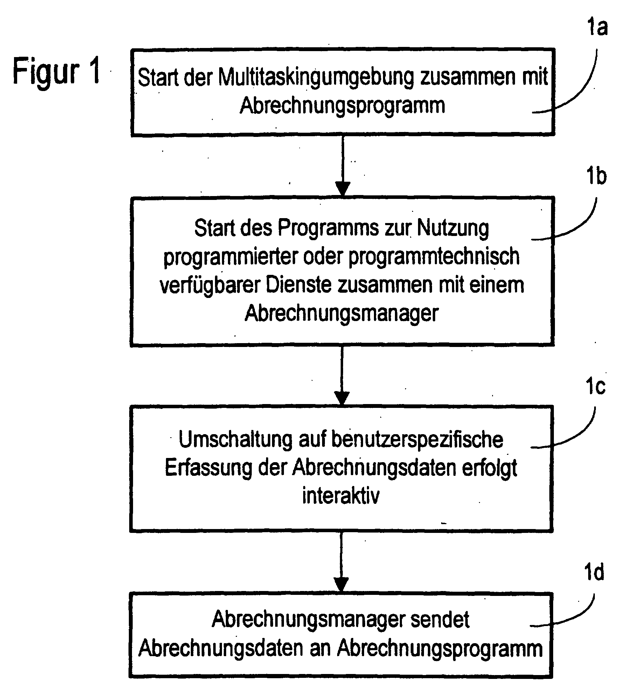

In Fig.1 sind die einzelnen Verfahrensschritte des erfindungsgemäßen Verfahrens in einem Ablaufdiagramm dargestellt. Mit dem Start einer Multitaskingumgebung, z.B. beim Einloggen eines Benutzers unter dem Betriebsystem UNIX (Warenzeichen), wird im Hintergrund ein Abrechnungsprogramm gestartet (Schritt 1a). Dieses Abrechnungsprogramm ist unsichtbar für den Benutzer und ist nur einem Benutzer oder mehreren Benutzern mit besonderen Rechten, unter UNIX kann es sich um die ROOT-Kennung handeln, zugänglich. Startet der Benutzer ein Anwendungsprogramm zur Nutzung programmierter oder programmtechnisch verfügbarer Dienste, so wird gleichzeitig ein zu diesem Anwendungsprogramm gehörender Abrechnungsmanager gestartet (Schritt 1b). Während der Benutzung des Anwendungsprogramms kann interaktiv eine Umschaltung der Erfassung der Abrechnungsdaten erfolgen (siehe Fig.1, Schritt 1c). Schließlich teilt der Abrechnungsmanager dem Abrechnungsprogramm die Abrechnungsdaten mit (Schritt 1d).

Eine vorteilhafte Weiterbildung des erfindungsgemäßen Verfahrens ist die Verwendung mehrerer Anwendungsprogramme zur Nutzung programmierter oder programmtechnisch verfügbarer Dienste, die unabhängig voneinander mit dem Abrechnungsprogramm benutzerspezifische Abrechnungsdaten austauschen.

Weiterhin ist es vorteilhaft, die Interaktion auf verschiedene Arten durchzuführen, z.B. durch einen Schaltknopf auf der Oberfläche eines Anwendungsprogramms oder durch eine feste Verknüpfung der Umschaltung der Abrechnungsart mit einem Menü, das beispielsweise den Zugriff auf privat interessante Themen ermöglicht.

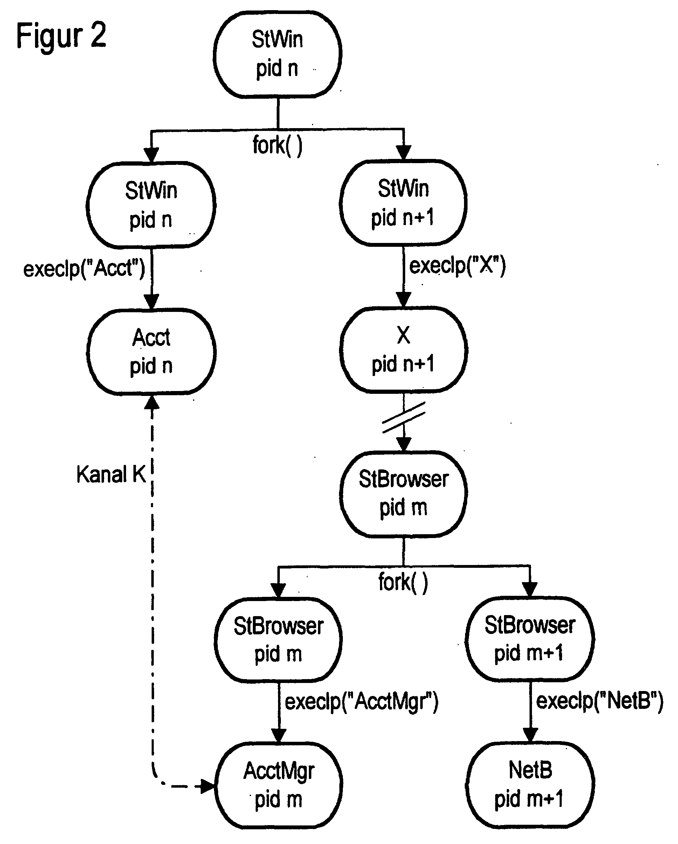

In Fig.2 ist ein Ausführungsbeispiel auf einem UNIX-System mit einer X-Windows-Oberfläche (Warenzeichen) dargestellt. Alternativ dazu kann auch jedes andere Multitasking-Betriebssystem verwendet werden. Der schematische Ablauf beginnt mit dem Aufruf der Windows-Oberfläche StWin mit der Prozeß-Identifikation 'pid n', wobei implizit ein zweiter identischer Prozeß StWin mit der Prozeß-Identifikation 'pid n+1' durch das fork-Kommando initiiert wird. Durch den Aufruf execlp("Acct") wird der eine Prozeß mit der Prozeß-Identifikation 'pid n' als Abrechnungsprogramm Acct festgelegt. Gleichzeitig wird durch den Befehl execlp("X") die X-Windows-Oberfläche X als paralleler Prozeß gestartet. Das Abrechnungsprogramm läuft dabei unsichtbar für den Benutzer im Hintergrund.

Auf der X-Windows-Oberfläche können nun nach Belieben Programme aufgerufen werden. Wird eine Applikation zur Nutzung programmierter oder programmspezifischer Dienste (Browser) StBrowser mit der Prozeß-Identifikation 'pid m' gestartet, so wird implizit durch das fork-Kommando ein zweiter identischer Prozeß StBrowser mit der Prozeß-Identifikation 'pid m+1' gestartet. Mit Hilfe des Kommandos execlp("AcctMgr") wird ein Abrechnungsmanager AcctMgr und mit execlp("NetB") ein Anwendungsprogramm zur Nutzung programmierter oder programmtechnisch verfügbarer Dienste initiiert. Entscheidet sich der Benutzer nun beispielsweise dazu, während der Laufzeit des Browsers diesen für private Dienste zu nutzen, so wird dies über ein Signal, eine Pipe oder eine Nachricht über einen Kanal K vom Abrechnungsmanager AcctMgr zum Abrechnungsprogramm Acct gesendet. Da dem Abrechnungsmanager AcctMgr die Prozeß-Identifikation pid der Applikation bekannt ist, können auch weitere Daten, wie z.B. Speicherbedarf, Ein-/Ausgabeaufkommen, usw. mit der entsprechenden Anforderung an das Abrechnungsprogramm übermittelt werden.

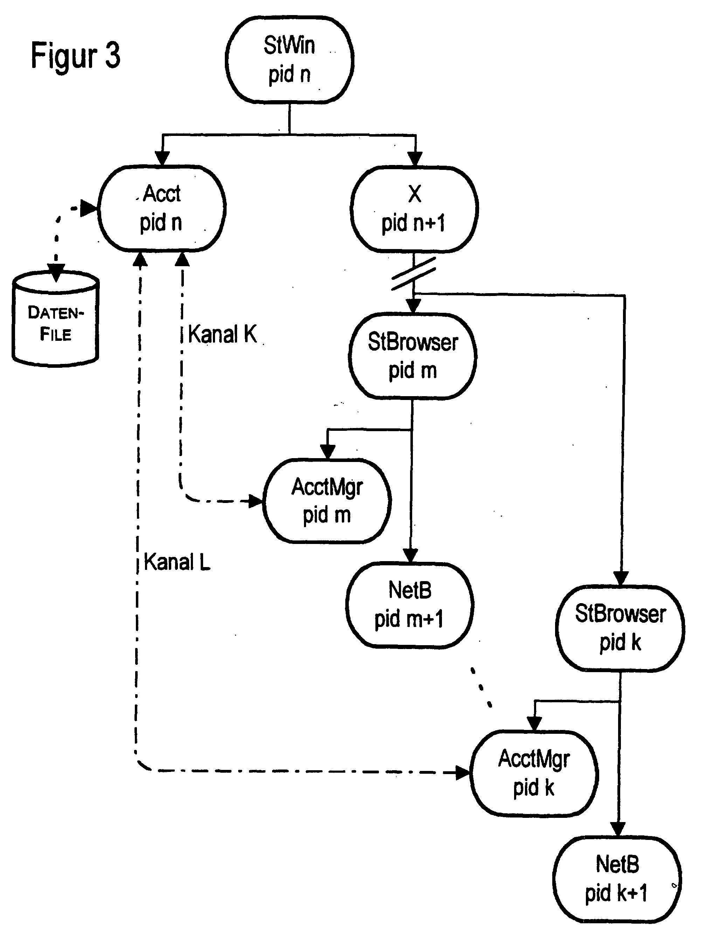

Fig.3 zeigt die mehrfache Instanziierung des Browsers NetB und die Kommunikation des zu jedem Browser NetB existierenden Abrechnungsmanagers AcctMgr mit dem Abrechnungsprogramm Acct. Der fork-Mechanismus, wie beispielsweise auf einem UNIX-System vorhanden, kann dazu benutzt werden, mehrere Anwendungen nebenläufig, ohne gegenseitige Beeinflussung zu betreiben und betriebsbedingte Daten differenziert zu erfassen. In Fig.3 werden beispielsweise mehrere Browser NetB mit den Prozeß-Identifikationen 'pid m+1' und 'pid k+1' unter einer X-Windows-Oberfläche X gestartet. Zu jedem Browser NetB existiert nebenläufig ein Abrechnungsmanager AcctMgr, der z.B. Nachrichten an das Abrechnungsprogramm Acct über einen Kanal K bzw. L schickt. Verarbeitete Daten vom Abrechnungsprogramm Acct werden in einem Datenfile abgelegt, auf das nur das Abrechnungsprogramm Acct zugreifen kann.

## Patentansprüche

1. Verfahren zur Erhebung von Abrechnungsdaten für eine Nutzung von programmierten oder programmtechnisch verfügbaren Diensten,
a) bei dem beim Starten einer Multitaskingumgebung ein Abrechnungsprogramm und eine Benutzeroberfläche gestartet werden,
b) bei dem unter der Benutzeroberfläche ein Programm zur Nutzung programmierter oder programmtechnisch verfügbarer Dienste und ein Abrechnungsmanager des Programms zur Nutzung programmierter oder programmtechnisch verfügbarer Dienste gestartet werden,
c) bei dem bei einem Ausführen des Programms zur Nutzung programmierter oder programmtechnisch verfügbarer Dienste von dem Abrechnungsmanager Abrechnungsdaten, welche abhängig sind von einem veränderbaren Abrechnungsmodus, in welchem das Programm zur Nutzung programmierter oder programmtechnisch verfügbarer Dienste ausgeführt wird, ermittelt werden,
d) bei dem die Abrechnungsdaten von dem Abrechnungsmanager an das Abrechnungsprogramm gesendet werden.

2. Verfahren nach Anspruch 1,
bei dem bei dem Ausführen des Programms zur Nutzung programmierter oder programmtechnisch verfügbarer Dienste der veränderbare Abrechnungsmodus verändert wird, wobei die Abrechnungsdaten an den geänderten Abrechnungsmodus angepasst werden.

3. Verfahren nach einem der vorangehenden Ansprüche,
bei dem mehrere Programme zur Nutzung programmierter oder programmtechnisch verfügbarer Dienste und die dazugehörigen Abrechnungsmanager gestartet werden, wobei jeder Abrechnungsmanager mit dem Abrechnungsprogramm kommuniziert.

4. Verfahren nach einem der vorangehenden Ansprüche,
bei dem die Änderung des veränderbaren Abrechnungsmodus in graphischer oder textueller oder ikonischer oder sensorischer oder dynamischer Form realisiert ist.

5. Verfahren nach einem der vorangehenden Ansprüche,
bei dem der veränderbare Abrechnungsmodus benutzerspezifische Eigenschaften berücksichtigt.

6. Verfahren nach Anspruch 5,
bei dem der veränderbare Abrechnungsmodus ein Abrechnungsmodus für eine private Nutzung des Programms zur Nutzung programmierter oder programmtechnisch verfügbarer Dienste oder ein Abrechnungsmodus für eine dienstliche Nutzung des Programms zur Nutzung programmierter oder programmtechnisch verfügbarer Dienste ist.

## Claims

1. Method for acquiring billing data for the use of programmed services or services which are available by means of programming technology,
a) in which, when a multitasking environment is started, a billing program and a user interface are started,
b) in which a program for the use of programmed services or services which are available by means of programming technology and a billing manager of the program for the use of programmed services or services which are available by means of programmed technology are started under the user interface,
c) in which, when the program for the use of programmed services or services which are available by means of programming technology is executed, the billing manager determines billing data which are dependent on a changeable billing mode in which the program for the use of programmed services or services which are available by means of programming technology is executed,
d) in which the billing data is transmitted from the billing manager to the billing program.

2. Method according to Claim 1, in which, when the program for the use of programmed services or services which are available by means of programming technology is executed, the changeable billing mode is changed, the billing data being adapted to the changed billing mode.

3. Method according to one of the preceding claims, in which a plurality of programs for the use of programmed services or services which are available by means of programming technology and the associated billing managers are started, each billing manager communicating with the billing program.

4. Method according to one of the preceding claims, in which the changeable billing mode is changed in graphic or text or iconic or sensory or dynamic form.

5. Method according to one of the preceding claims, in which the changeable billing mode takes into account user-specific properties.

6. Method according to Claim 5, in which the changeable billing mode is a billing mode for a private use of the program for the use of programmed services or services which are available by means of programming technology or a billing mode for a service use of the program for the use of programmed services or services which are available by means of programming technology.

## Revendications

1. Procédé pour régler le paiement de services programmés ou disponibles par des moyens techniques programmés,
a) dans lequel un programme de décompte et un écran utilisateur sont lancés lors du lancement d'un environnement multi-tâches,
b) dans lequel un programme d'utilisation de services programmés ou disponibles par des moyens techniques programmés et un gestionnaire de décompte du programme d'utilisation de services programmés ou disponibles par des moyens techniques programmés sont lancés sur l'écran utilisateur,
c) dans lequel des données de décompte, qui dépendent d'un mode de décompte variable, dans lequel le programme d'utilisation de services programmés ou disponibles par des moyens techniques programmés est exécuté, sont déterminées par le gestionnaire de décompte lors de l'exécution du programme d'utilisation de services programmés ou disponibles par des moyens techniques programmés,
d) dans lequel les données de décompte sont envoyées par le gestionnaire de décompte au programme de décompte.

2. Procédé selon la revendication 1,
dans lequel le mode de décompte variable est modifié lors de l'exécution du programme d'utilisation de services programmés ou disponibles par des moyens techniques programmés, les données de décompte étant adaptées au mode de décompte modifié.

3. Procédé selon l'une des revendications précédentes,
dans lequel plusieurs programmes d'utilisation de services programmés ou disponibles par des moyens techniques programmés et les gestionnaires de décompte qui en font partie sont lancés, chaque gestionnaire de décompte étant en communication avec le programme de décompte.

4. Procédé selon l'une des revendications précédentes,
dans lequel la modification du mode de décompte variable est réalisée sous forme de texte ou d'icône ou sous forme graphique, sensorielle ou dynamique.

5. Procédé selon l'une des revendications précédentes,
dans lequel le mode de décompte variable prend en compte des propriétés spécifiques aux utilisateurs.

6. Procédé selon la revendication 5,
dans lequel le mode de décompte variable est un mode de décompte pour une utilisation privée du programme d'utilisation de services programmés ou disponibles par des moyens techniques programmés ou un mode de décompte pour une utilisation officielle du programme d'utilisation de services programmés ou disponibles par des moyens techniques programmés.
